# EUROPEAN PATENT APPLICATION

(11) **EP 1 753 206 A1**
(43) Date of publication of application: **14.02.2007**
(21) Application number: 06118677.1
(22) Date of filing: 09.08.2006
(51) Int. Cl.: H04L 29/08, G06F 1/16

(54) **Network display apparatus and control method thereof**

(30) Priority: 12.08.2005 KR 20050074310
(71) Applicant: Samsung Electronics Co., Ltd., Suwon-si, Gyeonggi-Do (KR)
(72) Inventor: Park, Jong-won, Yeongtong-gu, Suwon-si, Gyeonggi-do (KR); Lee, In-ki, Yeongtong-gu, Suwon-si, Gyeonggi-do (KR)
(74) Representative: Read, Matthew Charles

(57) **Abstract**

A network display apparatus includes a display unit 40, a network module 10 to be connected to a server computer through a network, and a connector 20 to which an external device is connected. The network display apparatus also includes a file browser 53 to retrieve a file stored in the external device, a UI unit to allow a file retrieving function to be selected, and a controller 60 to execute the file browser and to control the display unit. Thus, the network display apparatus and a control method thereof, which displays a UI allowing a file in a storage device connected thereto to be retrieved by itself, which is of increased convenience for a user.

## Description

The present invention relates to a network display apparatus and a corresponding control method for the apparatus, and more particularly, to a network display apparatus, which operates while being connected to a server computer through a local area network (LAN).

Display apparatus, such as a liquid crystal display (LCD), plasma display panel (PDP) or the like, are widely used in televisions, computer monitors and other applications for displaying images.

It is known to provide a monitor having a network display function that can be connected to a network so as to display an image based on not only a video signal transmitted from a local computer but also on data received through the network. Further, this monitor can transmit or receive a predetermined control signal through the networkA plurality of such monitors may connected to a server computer through a LANand each of them is controlled by a software program or the like installed in the server computer.

For example, when the conventional monitor retrieves or displays a file from a memory stick or the like connected to a universal serial bus (USB) port, it retrieves or displays the file by the program installed in the server computer while being connected to the server computer. Further, the conventional monitor can perform a function such as Internet access and the like through the program installed in the server computer.

However, the monitor needs to be connected to the server computer to execute a corresponding program every time that the conventional monitor retrieves a file in a storage device connected to the monitor by itself, accesses the Internet, and so on. Thus, the conventional monitor has to perform a plurality of processes, which is inconvenient for a user.

The present invention provides a network display apparatus and a control method thereof, which displays a user interface (UI) to allow a file in a storage device connected thereto to be retrieved by the network display apparatus, which is more convenient for the user.

Additional aspects and/or advantages of the present invention will be set forth in part in the description which follows and, in part, will be obvious from the description, or may be learned by practice of the present invention.

The foregoing and/or other aspects and utilities of the present invention may be achieved by providing a network display apparatus, having a display unit to display an image thereon, a network module to be connected to a server computer through a network and to transmit and receive data, and a connector to be connected to an external device, the network display apparatus comprising a file browser to retrieve a file stored in the external device connected to the connector, a UI unit to allow a file retrieving function to be selected, and a controller to execute the file browser and to control the display unit to display a retrieved file list when the file retrieving function is selected through the UI unit.

The UI unit may comprise a UI generator to generate a UI menu to allow the file retrieving function to be selected.

The network display apparatus may further comprise a web browser to access Internet through the network module, wherein the UI menu comprises a UI item to select an Internet accessing function, and the controller executes the web browser when the Internet accessing function of the UI menu is selected.

The network display apparatus may further comprise a data storage unit to store at least one of programs corresponding to the UI generator, the file browser and the web browser.

The controller may comprise a bridge to interface an input/output of the data storage unit and the connector, and a main processor to load the at least one program stored in the data storage unit into a temporarily storing memory and to execute the loaded program.

The network display apparatus may further comprise a connection program to connect the network display apparatus to the server computer, wherein the UI menu comprises a second UI item to select a function to be connected to the server computer, and the controller executes the connection program and controls the network module to access the server computer when the function to be connected to the server computer is selected.

The connector may comprise a USB port.

The foregoing and/or other aspects and features of the present invention may be achieved by providing a method of controlling a network display apparatus comprising a display unit to display an image thereon, a network module to be connected to a server computer through a network and transmit and receive data, and a connector to which an external device is connected, the method comprising generating a UI menu to select a file retrieving function to be displayed on a display unit under a predetermined condition, retrieving a file stored in an the external device connected to a the connector when the file retrieving function of the UI menu is selected, and displaying the retrieved file list on the display unit.

The generating of the UI menu may comprise executing a web browser when an Internet accessing function of the UI menu is selected, and accessing Internet through the network module.

The method may further comprise executing a connection program when a function to be connected to the server computer is selected, and controlling the network module to access the server computer.

The generating of the UI menu may have the predetermined condition that includes a case where the network display apparatus is turned on.

The foregoing and/or other aspects and utilities of the present invention may be achieved by providing a display apparatus having a display unit, and a network module to be connected to a computer through a network, and a connector to be connected to an external memory device, the display apparatus comprising a data storage unit to store a program to directly access Internet through the network connected to the network module, and a controller to control the display unit to display an image corresponding to the program.

The foregoing and/or other aspects and utilities of the present invention may be achieved by providing a display apparatus having a display unit, a network module to be connected to a computer through a network, and a connector to be connected to an external memory device, the display apparatus comprising a data storage unit to store a program to directly retrieve a file stored in the external device connected to the connector, and a controller to control the display unit to display an image corresponding to the program.

The foregoing and/or other aspects and utilities of the present invention may be achieved by providing a display apparatus having a display unit, a network module to be connected to a computer through a network, and a connector to be connected to an external memory device, the display apparatus comprising a data storage unit to store a program to directly access Internet through the network connected to the network module and to directly retrieve a file stored in the external device connected to the connector, and a controller to control the display unit to display an image corresponding to the program.

The data storage unit may comprise a UI generator to generate a UI menu as the image when the program is executed.

The data storage unit may comprise a file browser to directly access the file of the external device without a control of the server computer when the program is executed, and to generate a menu corresponding to the accessed file.

The data storage unit may be not controlled by the computer connected to the network module when accessing the file of the external device.

The data storage unit may comprise a web browser to access the Internet without a control of the computer when the program is executed.

The data storage unit may generate a menu screen as the image according to an operation of the program, and the menu screen includes a computer connection, a local file browser, an Internet connection, and settings.

The data storage unit may generate a local file browser screen including the file of the external device according to an operation of the program.

The data storage unit may comprise a hard disk driver, a flash drive, or a flash memory.

The foregoing and/or other aspects and utilities of the present invention may be achieved by providing a display apparatus having a display unit, comprising a data storage unit to store a first program to directly access Internet and/or to directly retrieve a file of an external device, and to store a second program to indirectly access the Internet and/or indirectly retrieve the file of the external device, and a controller to control the display unit to display an image according to an operation of one of the first program and the second program.

The display apparatus may further comprise a connector connected to the external device.

The display apparatus may further comprise a network module to be connected to an external computer through a network.

The first program may be executed without a control of the external computer, and the second program is executed with a control of the external computer.

The first program may comprise a program to create a UI menu according to an operation of the first program, and the second program does not comprise the program to create the UI menu.

The data storage unit may access the Internet through an external computer to indirectly access the Internet.

These and other aspects and advantages of the present invention will become apparent and more readily appreciated from the following description of the embodiments, taken in conjunction with the accompanying drawings of which:
Figure 1 illustrates a network system including a network monitor;
Figure 2 is a block diagram for one of the network monitors shown in Figure 1;
Figure 3 is a control flowchart for the network monitor shown in Figure 2; and
Figures 4A and 4B illustrate a UI screen and an execution screen of a file browser, respectively displayed by the monitor.

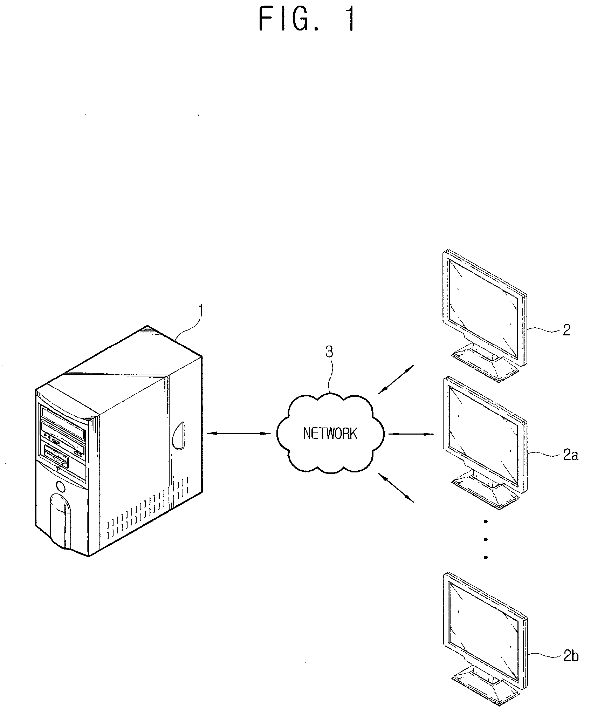

. Referring to Figure 1, a network display apparatus 2 in the form of a network monitor, is connected to a server computer 1 through a network 3, and receives video data from the server computer 1, so as to display an image based on the received video data. The network 3 may comprise a local area network (LAN), which may use a predetermined protocol to transmit and receive data. Further network display apparatus 2a, 2b may be connected to the network 3 to communicate with the server 1.

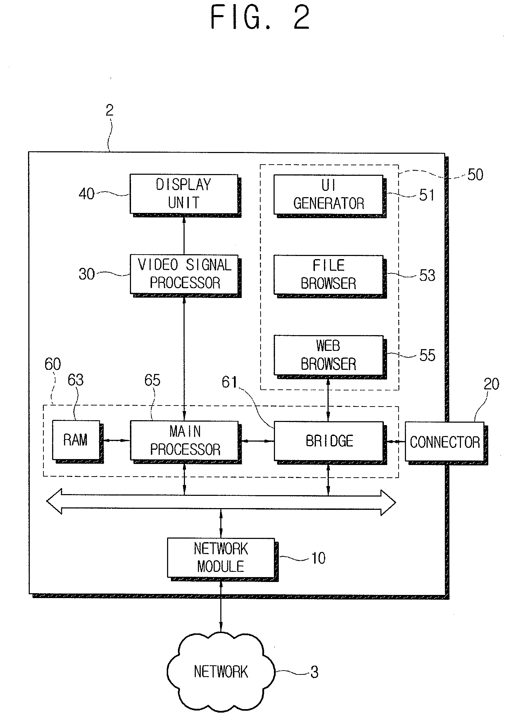

Figure 2 is a block diagram illustrating the network monitor 2, which includes a network module 10, a connector 20, a video signal processor 30, a display unit 40 to display an image thereon, a data storage unit 50 to store program information, and a controller 60. The data storage unit 50 includes a user interface (UI) generator 51, a file browser 53, and a web browser 55. The program information stored in the data storage unit 50 includes programs to operate, for example, the (UI) generator 51, the file browser 53, and the web browser 55.

The network module 10 communicates data with the server computer 1 according to a predetermined protocol, and receives the video data from the server computer 1 through the network 3. In this example, the network module 10 transmits and receives data through a TCP/IP protocol. The network display apparatus 2 has an IP address. Thus, the server computer 1 transmits the video data to the IP address of the display apparatus 2 connected thereto through the network 3. Alternatively, the server computer 1 may be connected with the display apparatus 2 by another communication system such as infrared data association or Bluetooth. The IP address may be stored in any of the controller 60, the network module 10, the data storage unit 50, and a memory of the network display apparatus 2.

The connector 20 is used to connect the display apparatus 2 with an external device such as a memory stick, a MP3 player, a camcorder and the like, and a peripheral device such as a keyboard, a mouse and the like. For example, the connector 20 includes a USB port or the like.

The video signal processor 30 processes the video data from the server computer 1 to have a proper format for the display unit 40. For example, the video data is processed to have a low voltage differential signalling (LVDS) format, and transmitted to the display unit 40 through an LVDS connector (not shown).

The video signal processor may have various functions corresponding to the formats of an input video signal. For example, the video signal processor can have an analog/digital (A/D) converting function and a digital decoding function to convert the input video signal having various formats into a digital video signal having a certain format, a scaling function to adjust the digital video signal to have a vertical frequency, resolution and an aspect ratio, etc., adapted for the output of the display unit 40, and an LVDS format converting function.

The UI generator 51 generates a UI menu allowing a user to select various functions of the network display apparatus 2. Here, the UI generator 51 may be implemented by a UI generating program. The UI menu generated by the UI generator 51 can include various items like a UI item to select a function to be connected to the server computer 1, a function to retrieve a file stored in the external device, a function to access Internet, and a function to set up the network display apparatus 2. Detailed descriptions of the UI generator 51 will be described later.

The file browser 53 is provided to retrieve a file stored in the external device connected to the connector 20. Here, the file browser 53 may be implemented by a file management program. The file browser 53 can retrieve the file stored in an internal memory (not shown) as well as the external device connected to the connector 20.

The UI generator 51 and/or the file browser 53 may be implemented by a software program, which is stored in a data storage unit 50, as shown in Figure 2, and executed by control of the controller 60 (to be described later). Here, the data storage unit 50 includes a hard disk drive (HDD), a flash disk, a flash memory, or the like. Images corresponding to the UI menu and the file browser can be displayed on the display unit 40, and a menu or a file included in the image can be selected through a user input unit connected to the connector 20.

The data storage unit 50 can store various control routines to generate/process data and to process data received through the network module 10 in addition to the UI generator 51 and the file browser 53. For example, the data storage unit 50 can store a predetermined operating program of the network display apparatus 2, an application program to execute various data received through the network module 10, etc.

Further, the network display apparatus 2 may include the web browser 55. The web browser 55 is provided to allow the network display apparatus 2 to directly access Internet, so that a user can access Internet without using the server computer 1. In this case, a software program corresponding to the web browser 55 can be stored in the data storage unit 50. The network display apparatus 2 may have an internet connection to directly access the Internet through the network 3 without accessing the server computer 1.

The controller 60 executes the program corresponding to the UI generator 51 stored in the data storage unit 50 so as to generate the UI menu. According to a user's selection through the UI menu, the controller 60 executes a corresponding program stored in the data storage unit 50, and controls a corresponding operation to be implemented. Here, the controller 60 may include a bridge 61, a random access memory (RAM) 63, and a main processor 65.

The bridge 61 manages a data interchange between the data storage unit 50 and the main processor 65, and manages the input/output in the connector 20. The main processor 65, the bridge 61 and the network module 10 may be connected through a predetermined data bus, e.g., a peripheral component interconnect (PCI) bus.

The RAM 63 is loaded with a control routine or various data while the main processor 65 operates. For example, the RAM 63 may include an SDRAM or a DDR-RAM.

The main processor 65 loads the program corresponding to the UI generator 51 stored in the data storage unit 50 into the RAM 63 and executes the program. Further, the main processor 65 receives a command through the user input unit, for example, a keyboard and/or a mouse or the like, and controls the RAM 63 to be loaded with the program and its corresponding control routine related to the function selected through the UI menu, to thereby execute the program. Here, the main processor 65 may include a central processing unit (CPU, not shown), a memory controller (not shown) to control the RAM 63, and a graphic controller (not shown) to process a video signal, which can be integrated into one chip.

The main processor 65 outputs the video signal to the video signal processor 30.

When the function to be connected to the server computer 1 is selected through the UI menu, the controller 60 is driven by an operating program or an application program that is stored in the server computer 1 connected through the network module 10. The controller 60 is, therefore, not driven by an operating program or an application program stored in the data storage unit 50. The main processor 65 receives a command through a separate input unit, e.g., the keyboard and/or the mouse connected to the USB port of the connector 20, and transmits the received command to the computer through the network, to thereby control the operating program and the application program.

The network display apparatus 2 may execute its own operating program and application program at the same time when it is connected to the server computer 1 and executes the programs installed in the server computer 1. The network display apparatus 2 can execute the program corresponding to the UI generator 51 and displays the UI menu after initializing an internal module when it is turned on, to thereby allow a user to select a desired function through the keyboard and/or the mouse. Also, the UI menu can be displayed even when another function is finished and thus a relevant image is shut down, thereby increasing a user's convenience.

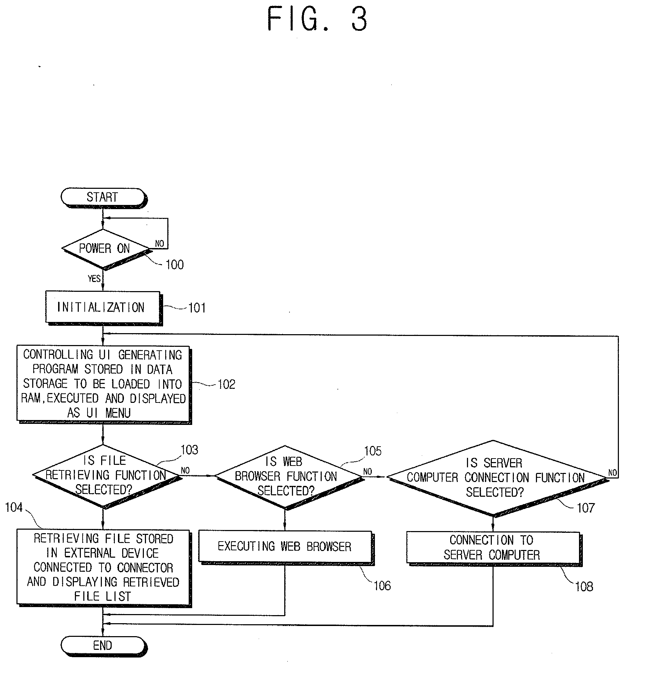

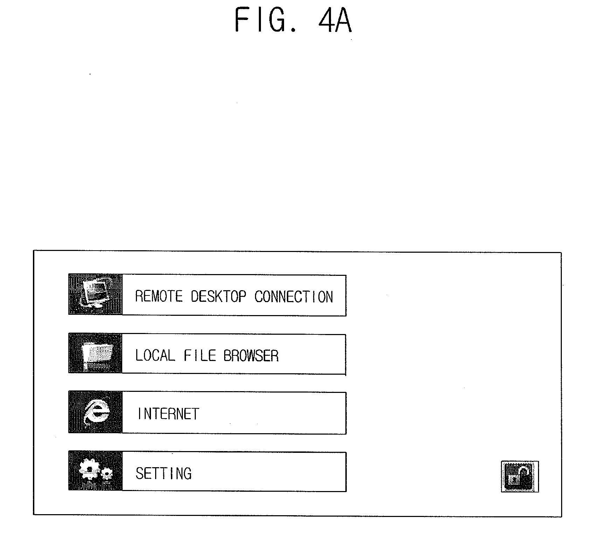

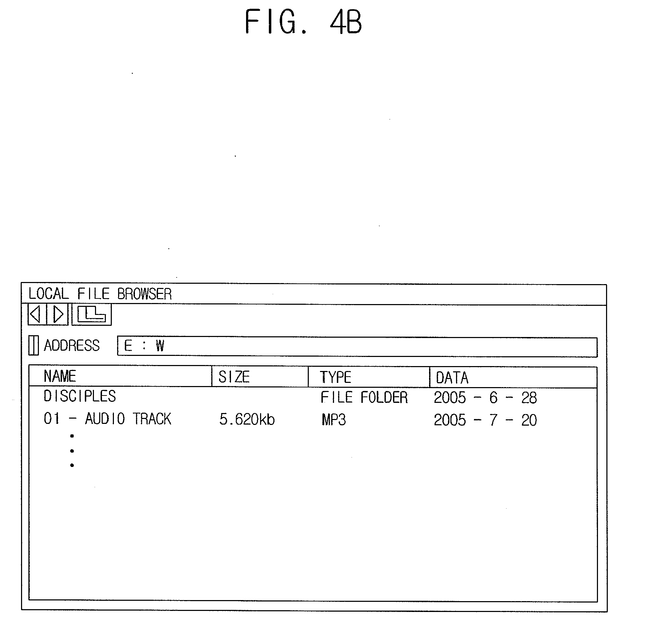

Below, a control flowchart of the network display apparatus 2 according to an embodiment of the present invention will be described with reference to Figures 3, 4A and 4B.

Figure 3 is a control flowchart illustrating the network monitor according to an embodiment of the present invention. Referring to Figure 3, at operation 100, the network display apparatus 2 is turned on. Then, at operation 101, the operating program is loaded by an initialization process. At operation 102, the main processor 65 loads the program corresponding to the UI generator 51 stored in the data storage unit 50 into the RAM 63, and executes the program. In operation 102, UI data is output to the video signal processor 30 and displayed as an image on the display unit 40.

. In operation 102, the UI generating program 51 stored in the data storage unit 50 is thus controlled to be loaded into the RAM 63, and executed to display a UI menu. In operation 103, it is determined whether a file retrieving function is selected. When the file retrieving function is selected, the file stored in an external device connected to the connector 20 is retrieved, and the retrieved file list is displayed in operation 104. That is, the file browser 53 is executed. In operation 105, it is determined whether a web browser function is selected. When the web browser function is selected, the web browser 55 is executed in operation 106. In operation 107, it is determined whether a sever computer connection function is selected. When the server computer connection function is selected, a connection to the server computer 1 is executed in operation 108.

Figures 4A and 4B illustrate a UI screen and an execution screen of a file browser according to an embodiment of the present invention, respectively. Here, the UI image displayed on the display unit 40 may include items such as "remote desktop connection" item, "local file browser" item, "Internet" item, and "setting item."

The "remote desktop connection" item is an item provided to connect to the server computer 1. The "local file browser" item is an item provided to retrieve the file stored in the external device connected to the USB port or the like. The "Internet" item is an item provided to access the Internet. The "setting" item is an item to check and to change a setting of the network display apparatus 2.

At operation 103, when a user selects the "local file browser" item through the keyboard and/or the mouse, a corresponding input control signal is transmitted to the main processor 65 through the bridge 61 at operation 104, and the main processor 65 loads a program corresponding to the file browser 53 stored in the data storage unit 50 into the RAM 63 and executes it. In operation 103, it is determined whether the file retrieving function 53 is selected. At the operation 104, the file browser 53 retrieves the file stored in the external device connected to the connector 20 such as the USB port or the like, and outputs the video data corresponding to a retrieved file list. Thus, the display unit 40 displays the retrieved file list on the screen thereof.

Referring to Figure 4B, a UI corresponding to the execution screen of the file browser is displayed on the display unit 40. The UI shows a file browser having "Disciples" and "01-Audio Track01", which are stored in and retrieved from an E drive of either one of the server computer 1, the external memory or the data storage unit 50. Thus, a user can select a desired file on the screen, and may view or otherwise open contents of the desired file. The controller 60 controls the RAM 63 to be loaded with the program from the data storage 50 so as to execute the file selected by a user.

At operation 105, when a user selects the item of "Internet", the main processor 65 executes a program corresponding to the web browser stored in the data storage unit 50 at operation 106, thereby accessing Internet through the network module 10.

At operation 107, when a user selects the item of "remote desktop connection" item, the main processor 65 executes a program corresponding to the network connection stored in the data storage unit 50, thereby being connected to the server computer 1. As described above, the network display apparatus 2 can carry out the desired function by executing the program installed in the server computer 1. Further, to retrieve the file or the like stored in the external device connected to the connector 20, the network display apparatus 2 can execute the program installed in the server computer 1 without using the file browser 53 of the network display apparatus 2.

On the other hand, when the network display apparatus 2 uses its own file retrieving function or its own Internet accessing program to carry out a corresponding function even though the network display apparatus 2 is connected to the server computer 1, the network display apparatus 2 can not only select and execute a corresponding item in the UI menu displayed on the screen as it is disconnected from the server computer 1 but also select and execute a corresponding item in the UI menu displayed to be kept on the top of other windows on the screen as it is connected to the server computer 1. Thus, a user can easily select the desired function regardless of whether the network display apparatus 2 is connected to or disconnected from the server computer 1.

In the foregoing embodiment, the UI menu generated by the UI generator 51 is used to select the desired function, but the UI generator 51 is not limited thereto. Alternatively, a separate key may be provided to select the desired function.

As described above, the present invention provides a network display apparatus and a control method thereof, which displays a UI to allow a file in a storage device connected thereto to be retrieved by itself, thereby increasing a user's convenience.

Although embodiments of the present invention have been shown and described, it will be appreciated by those skilled in the art that changes may be made in these embodiments without departing from the invention, the scope of which is defined in the appended claims.

## Claims

1. A network display apparatus (2), comprising:
a display unit (40) to display an image thereon,
a network module (10) to be connected to a server computer through a network and
to transmit and receive data,
a connector (20) to be connected to an external device,
a file browser (53) to retrieve a file stored in the external device connected to the connector;
a UI unit (51) to allow a file retrieving function to be selected; and
a controller (60) to execute the file browser and to control the display unit to display a retrieved file list when the file retrieving function is selected through the UI unit.

2. The network display apparatus according to claim 1, wherein the UI unit comprises a UI generator (51) to generate a UI menu to allow the file retrieving function to be selected.

3. The network display apparatus according to claim 2, further comprising:
a web browser (55) to access Internet through the network module,
wherein the UI menu comprises a UI item to select an Internet accessing function, and the controller executes the web browser when the Internet accessing function of the UI menu is selected.

4. The network display apparatus according to claim 3, further comprising a data storage unit (50) to store at least one of programs corresponding to the UI generator, the file browser and the web browser.

5. The network display apparatus according to claim 4, wherein the controller comprises a bridge (61) to interface an input/output of the data storage unit and the connector, and a main processor (65) to load the at least one program stored in the data storage unit into a temporarily storing memory and to execute the loaded program.

6. The network display apparatus according to any one of claims 2 to 5, further comprising:
a connection program to connect the network display apparatus to the server computer,
wherein the UI menu comprises a second UI item to select a function to be connected to the server computer, and the controller executes the connection program and controls the network module to access the server computer when the function to be connected to the server computer is selected.

7. The network display apparatus according to any preceding claim, wherein the connector comprises a USB port.

8. A method of controlling a network display apparatus comprising a display unit to display an image thereon, a network module to be connected to a server computer through a network and transmit and receive data, and a connector to which an external device is connected, the method comprising:
generating a UI menu to select a file retrieving function to be displayed on a display unit under a predetermined condition;
retrieving a file stored in an the external device connected to a the connector when the file retrieving function of the UI menu is selected; and
displaying the retrieved file list on the display unit.

9. The method according to claim 8, wherein the generating of the UI menu comprises:
executing a web browser when an Internet accessing function of the UI menu is selected; and
accessing Internet through the network module.

10. The method according to claim 8, wherein the method further comprises executing a connection program when a function to be connected to the server computer is selected; and
controlling the network module to access the server computer.

11. The method according to claim 8, wherein the generating of the UI menu has the predetermined condition that includes a case where the network display apparatus is turned on.

12. A display apparatus having a display unit, and a network module to be connected to a computer through a network, and a connector to be connected to an external memory device, the display apparatus comprising:
a data storage unit to store a program to directly access Internet through the network connected to the network module; and
a controller to control the display unit to display an image corresponding to the program.

13. A display apparatus having a display unit, a network module to be connected to a computer through a network, and a connector to be connected to an external memory device, the display apparatus comprising:
a data storage unit to store a program to directly retrieve a file stored in the external device connected to the connector; and
a controller to control the display unit to display an image corresponding to the program.

14. A display apparatus having a display unit, a network module to be connected to a computer through a network, and a connector to be connected to an external memory device, the display apparatus comprising:
a data storage unit to store a program to directly access Internet through the network connected to the network module and to directly retrieve a file stored in the external device connected to the connector; and
a controller to control the display unit to display an image corresponding to the program.

15. The display apparatus of claim 14, wherein the data storage unit comprises a UI generator to generate a UI menu as the image when the program is executed.

16. The display apparatus of claim 14, wherein the data storage unit comprises a file browser to directly access the file of the external device without a control of the server computer when the program is executed, and to generate a menu corresponding to the accessed file.

17. The display apparatus of claim 14, wherein the data storage unit is not controlled by the computer connected to the network module when accessing the file of the external device.

18. The display apparatus of claim 14, wherein the data storage unit comprises a web browser to access the Internet without a control of the computer when the program is executed.

19. The display apparatus of claim 14, wherein the data storage unit generates a menu screen as the image according to an operation of the program, and the menu screen includes a computer connection, a local file browser, an Internet connection, and settings.

20. The display apparatus of claim 14, wherein the data storage unit generates a local file browser screen including the file of the external device according to an operation of the program.

21. The display apparatus of claim 14, wherein the data storage unit comprises a hard disk driver, a flash drive, or a flash memory.

22. A display apparatus having a display unit, comprising:
a data storage unit to store a first program to directly access Internet and/or to directly retrieve a file of an external device, and to store a second program to indirectly access the Internet and/or indirectly retrieve the file of the external device; and
a controller to control the display unit to display an image according to an operation of one of the first program and the second program.

23. The display apparatus of claim 22, further comprising:
a connector connected to the external device.

24. The display apparatus of claim 22, further comprising:
a network module to be connected to an external computer through a network.

25. The display apparatus of claim 22, wherein the first program is executed without a control of the external computer, and the second program is executed with a control of the external computer.

26. The display apparatus of claim 22, wherein the first program comprises a program to create a UI menu according to an operation of the first program, and the second program does not comprise the program to create the UI menu.

27. The display apparatus of claim 22, wherein the data storage unit accesses the Internet through an external computer to indirectly access the Internet.
